# EUROPÄISCHE PATENTSCHRIFT

(11) **EP 3 274 120 B1**
(45) Veröffentlichungstag und Bekanntmachung des Hinweises auf die Patenterteilung: **22.09.2021**
(21) Anmeldenummer: 16710406.6
(22) Anmeldetag: 03.03.2016
(51) Int. Cl.: B23F 23/12, B23F 21/00, B23P 13/02, B23F 5/16, B23F 21/03, B23P 15/14

(54) **VERFAHREN UND VORRICHTUNG ZUM FEINBEARBEITEN VERZAHNTER UND GEHÄRTETER WERKRÄDER**
METHOD AND DEVICE FOR PRECISION-MACHINING TOOTHED AND HARDENED WORK WHEELS
PROCÉDÉ ET DISPOSITIF D'USINAGE DE PRÉCISION DE PIGNONS TREMPÉS ET DENTÉS

(30) Priorität: 24.03.2015 DE 102015104404; 02.11.2015 DE 102015118721; 26.11.2015 DE 102015120556
(43) Veröffentlichungstag der Anmeldung: 31.01.2018
(73) Patentinhaber: Profilator GmbH & Co. KG, 42329 Wuppertal (DE)
(72) Erfinder: PROCK, Erich, 88213 Ravensburg (DE)
(74) Vertreter: Grundmann, Dirk
(86) Internationale Anmeldenummer: PCT/EP2016/054568
(87) Internationale Veröffentlichungsnummer: WO 2016/150674

(56) Entgegenhaltungen:
- EP-A2- 0 282 046
- DE-A1- 2 654 177
- DE-A1- 10 305 752
- DE-A1-102011 118 702
- DE-C1- 3 930 322
- DE-C1- 19 625 520
- US-B2- 8 732 937

## Beschreibung

### Gebiet der Technik

Die Erfindung betrifft ein Verfahren gemäß dem Oberbegriff des Anspruchs 1 und eine Vorrichtung gemäß dem Oberbegriff des Anspruchs 6 zum Bearbeiten verzahnter, gehärteter Werkräder sowie ein diesbezüglich verwendbares Werkzeug gemäß dem Oberbegriff des Anspruchs 9.

### Stand der Technik

Gehärtete Zahnräder werden durch eine Mehrzahl aufeinander folgender Arbeitsschritte gefertigt. Zunächst wird ein aus einem ungehärteten Stahl bestehender Rohling mit einem der vielen aus dem Stand der Technik her bekannten Verfahren mit einer Innen- oder Außenverzahnung versehen. Dies kann durch Stoßen, Wälzfräsen, aber auch durch Wälzschälen erfolgen. Danach wird das vorverzahnte Werkrad gehärtet. Nach dem Härten erfolgt eine Feinbearbeitung durch Honen/Schleifen. Die Feinbearbeitung wird mit mehreren voneinander verschiedenen Werkzeugmaschinen durchgeführt, wobei das Werkrad jedes Mal umgespannt wird. Dies erfordert ein Hereintasten beispielsweise des Honrades in die Zahnlücken des verzahnten Werkrades, da dieses mit einem Rundlauffehler aufgespannt ist. Bei der Feinbearbeitung wird ein zuvor belassenes Aufmaß von den Zähnen der zu fertigenden Verzahnung abgetragen. Aufgrund eines nicht zu vermeidenden Aufspannfehlers und nicht zu vermeidender Härteverzüge ist das Aufmaß ungleich über den Umfang des Werkrades verteilt.

Aus der DE 35 33 064 A1, die ein Verfahren gemäß dem Oberbegriff des Anspruchs 1 und eine Vorrichtung gemäß dem Oberbegriff des Anspruchs 6 offenbart, ist ein Verfahren zur Bearbeitung der Flanken von Zahnrädern durch Wälzschälen sowie eine hierzu geeignete Vorrichtung bekannt. Die Flanken ungehärteter, aber auch gehärteter grat- oder schrägverzahnter Zahnräder sollen durch Wälzschälen bearbeitet werden. Mit dem Wälzschälen gehärteter Zahnflanken soll das Schleifen oder Hartschaben, aber auch Honen oder Feinen ersetzt werden.

Die DE 103 05 752 A1 die ein Werkzeug gemäß dem Oberbegriff des Anspruchs 9 offenbart, beschreibt ein Kombinationswerkzeug zum Verzahnen zylindrischer Bauteile, wobei ein Schälrad zum Wälzschälen und mindestens ein Schabrad zum Schaben auf einer gemeinsamen Welle angeordnet sind, so dass in zwei aufeinander folgenden Bearbeitungsschritten zunächst das Wälzschälen und anschließend das Schaben ohne Werkstückwechsel in einer Maschine durchgeführt werden kann.

### Zusammenfassung der Erfindung

Der Erfindung liegt die Aufgabe zugrunde, das Fertigungsverfahren zur Verzahnung gehärteter Werkräder zu verbessern und eine diesbezügliche Vorrichtung bzw. ein hierzu verwendbares Werkzeug anzugeben.

Gelöst wird die Aufgabe durch die in den Ansprüchen 1, 6 und 9 angegebene Erfindung. Die Unteransprüche stellen vorteilhafte Weiterbildungen der unabhängigen Ansprüche dar.

Zunächst und im Wesentlichen wird vorgeschlagen, dass das vorverzahnte, gehärtete Werkrad, dessen Verzahnung ein Aufmaß aufweist, auf eine Werkstückspindel aufgespannt wird. In dieser Aufspannung wird der wesentliche Teil des Aufmaßes, also mindestens 50%, bevorzugt mehr als 80% oder mehr als 90% des Aufmaßes, durch Wälzschälen mit einem von einer Werkzeugspindel drehangetriebenen Schälrad abgetragen. Das Aufmaß ist größer als der Härtefehler bzw. der Aufspannfehler, so dass beim Wälzschälen keine Luftschnitte durchgeführt werden. Es erfolgt kein Herantasten an das verfahrensbedingt immer ungleich verteilte Aufmaß. In einem anschließenden Feinbearbeitungsschritt, bei dem das Werkrad in der Aufspannung auf der Werkstückspindel verbleibt, werden die Zahnflanken mittels eines Honrades fein bearbeitet. Da durch den Wälzschälvorprozess alle Rundungsfehler und Härtefehler ausgeglichen worden sind, muss das Honrad nicht in die Verzahnung des Werkrades hineingetastet werden. In einer bevorzugten Ausführung des Verfahrens erfolgt die Schälbearbeitung nicht in vielen aufeinander folgenden Schritten, sondern in einem einzigen Schnitt, wobei die Zustellung einmal, nämlich außerhalb des Werkstücks in Profilrichtung, also in radialer Richtung erfolgt. Die Schälbearbeitung kann aber auch aus einer Vielzahl aufeinander folgender Schritte bestehen. Der Vorschub erfolgt dann beim Schnitt nicht in Profilrichtung. Bei der Bearbeitung erfolgt der Vorschub in Zahnerstreckungsrichtung, beispielsweise bei einer Geradverzahnung in Achsrichtung. Es wird also sofort ins volle Material geschnitten. Bei dieser Schälbearbeitung werden zwar die Härtefehler und die Rundlauffehler, insbesondere die durch das Aufspannen erzeugten Rundlauffehler beseitigt, indem ein wesentlicher Teil des Aufmaßes abgetragen wird. Die Verzahnungsgenauigkeit ist aber nicht ausreichend. Darüber hinaus besitzen die Zahnflanken des lediglich wälzgeschälten gehärteten Werkrades noch keine genügende Oberflächengüte. Die erforderliche Oberflächengüte bzw. Verzahnungsgenauigkeit wird durch den Honbearbeitungsschritt erreicht. Das erfindungsgemäße Verfahren besteht somit aus einem den wesentlichen Teil des Aufmaßes abtragenden Hart-Schruppschritt und einem darauf folgenden Hart-Schlichtschritt, wobei der Schruppschritt durch Wälzschälen und der Schlichtschritt durch Honen durchgeführt wird und beide Bearbeitungsschritte in derselben Aufspannung des Werkrades erfolgen. Der Schruppschritt erfolgt bevorzugt mit einem Hartmetall-Schälrad, der Schlichtschritt erfolgt bevorzugt mit einem keramisch gebundenen Honrad. Das Honrad wird vorzugsweise in derselben Werkzeugmaschine abgerichtet. Hierzu besitzt die Werkzeugmaschine ein Abrichtwerkzeug. Es wird das auf der Werkzeugspindel sitzende Honrad abgerichtet. Das Abrichtwerkzeug wird bevorzugt von der Werkstückspindel aufgenommen und von der Werkstückspindel im Synchronlauf zur Werkzeugspindel gedreht. Das Abrichtwerkzeug kann ein Abricht-Meisterring mit diamantbesetzter Verzahnung sein. Das Honrad kann ein CBN-Werkzeug sein. Es wird als vorteilhaft angesehen, dass mit dem erfindungsgemäßen Verfahren eine höchste Genauigkeit und eine höchste Oberflächengüte erreichbar ist. Durch das Abrichten des Honrades in der Maschine selbst werden negative Einflüsse des Werkzeuges durch Rundlauf-, Spann- und Fertigungsfehler vermieden. Während der Vorschub beim Wälzschälen in der Erstreckungsrichtung der Verzahnung, also bei einer Geradverzahnung in Achsrichtung der Werkstückspindel erfolgt, erfolgt die Zustellung beim Honen in Profilrichtung, also in Radialrichtung. Dabei oszilliert das Werkstück in Zahnerstreckungsrichtung, also bei einer Geradverzahnung in Achsrichtung der Werkstückspindel. Das Honrad und das Schälrad können von einem Kombiwerkzeug gebildet sein. Honrad und Schälrad sitzen dann axial hintereinander und werden von einer gemeinsamen Werkzeugspindel drehangetrieben. Beide Bearbeitungsverfahren, also das Schälen eines gehärteten Werkrades und das Honen der auf Kontur gebrachten Verzahnung mit einem Honrad arbeiten im Wesentlichen nach dem gleichen Prinzip bzw. mit der gleichen Maschinenkinematik. Dadurch können beide Bearbeitungsschritte in derselben Maschine mit angepassten Vorschüben und Schnittgeschwindigkeiten betrieben werden. Von jedem der beiden Verfahrensschritte wird jeweils der dem Verfahren eigene Vorteil ausgenutzt. Die erfindungsgemäße Vorrichtung besitzt eine drehantreibbare Werkstückspindel und eine drehantreibbare Werkzeugspindel. Beide Spindeln werden von Elektromotoren angetrieben, die synchronisiert sind. Es ist eine elektronische Steuereinrichtung vorgesehen, die nach einem Bearbeitungsprogramm arbeitet. Diese elektronische Steuereinrichtung steuert die Drehbewegung der Spindeln, die Zustellbewegung und den Vorschub. Erfindungsgemäß ist die elektronische Steuereinrichtung derart eingerichtet, das heißt programmiert, dass die eingangs beschriebenen Verfahrensschritte in der vorgeschriebenen Reihenfolge durchgeführt werden. Das erfindungsgemäße Werkzeug ist ein Kombiwerkzeug. Bei diesem Werkzeug sind das Schälrad und das Honrad in Koaxiallage miteinander verbunden. Das Schälrad kann axial vor dem Honrad angeordnet sein. Das Schälrad kann einen geringen Durchmesser aufweisen als das Honrad. Bei dem Honrad handelt es sich um ein abrichtbares Honrad, insbesondere um ein CBN-Honrad. Das zur Abrichtung des Honrades verwendete Abrichtwerkzeug ist Teil der Vorrichtung. Bei dem Werkrad handelt es sich bevorzugt um ein gehärtetes vorverzahntes Zahnrad. Die Vorverzahnung besitzt das Aufmaß und wird bevorzugt vor dem Härten des Werkrades beispielsweise durch Wälzschälen, aber auch durch ein anderes in der Beschreibungseinleitung genanntes Verfahren hergestellt. Das gehärtete, vorverzahnte Werkrad kann aus einem Einsatzstahl mit einem Kohlenstoffgehalt von bis zu 0,2% bestehen. Gemäß anderer Ausführungsformen der Erfindung besitzt der Stahl aber auch einen Kohlenstoffgehalt von mehr als 0,2%. Beim Härten wird das Werkrad wärmebehandelt und bekommt eine höhere Härte an seiner Oberfläche und in dem darunter liegenden Gefüge. Bei einer bevorzugten Variante der Erfindung besitzt das vorverzahnte Werkstück eine Oberflächenhärte zwischen 52 HRC und 63 HRC (Härte nach Rockwell, gemessen mit einem Diamantkegel). In anderen Ausführungsvarianten kann die Oberflächenhärte auch unter 52 HRC aber auch unter 45 HRC bzw. über 63 HRC liegen. Die Härte wird durch eine Gefügeumwandlung zwischen Eisen und Kohlenstoff während des Wärmebehandlungsprozesses erreicht. Es erfolgt eine Martensitbildung und die Ausscheidung von Karbiden. Erfindungsgemäß wird die gehärtete Vorverzahnung nach der Wärmebehandlung und dem Wälzschälen durch eine Hartfeinbearbeitung auf die endgültig geforderte Qualität gebracht. Die Oberflächenhärte auf der Zahnflanke kann je nach Wärmebehandlungsprozess und Werkstoff über eine bestimmte Dicke einen konstanten Wert besitzen. Die Erfindung betrifft Ausführungsformen, bei denen die Härte des Werkstoffes zum Inneren des Zahnes abnimmt. Die Kernhärte bzw. Kernfestigkeit ist dann geringer als die Oberflächenhärte bzw. Oberflächenfestigkeit. Die Einhärttiefe kann bei Varianten der Erfindung variieren. Bei der Feinbearbeitung des Werkrades erfolgt ein Materialabtrag zwischen 10 µm und 100 µm oder zwischen 10 µm und 150 µm. In einer Variante der Erfindung ist vorgesehen, dass sich die Werkstoffhärte über die Stärke des Aufmaßes nicht ändert, wobei das Aufmaß im Bereich zwischen 20 µm und 300 µm liegen kann. Der zu zerspanende Werkstoff soll zumindest eine Härte von 45 HRC besitzen. Gemäß einer Variante der Erfindung besitzt der vorverzahnte, gehärtete Rohling eine Zugfestigkeit von Rₘ = 1430 N/mm². Gemäß einer Variante der Erfindung ist das vorverzahnte und gehärtete Werkstück zumindest über die Materialstärke des Aufmaßes durchgehärtet. Die Zahnflanken werden gewissermaßen von einer Oberflächenzone mit im Wesentlichen gleicher Härte, die zumindest mehr als 45 HRC betragen kann, gebildet, wobei diese Zone eine senkrecht zur Zahnflankenerstreckungsebene gemessene Tiefe besitzt, die größer ist als das Aufmaß und insbesondere größer als 100 µm, bevorzugt größer als 200 µm ist. Sowohl die Wälzschälbearbeitung als auch die sich daran anschließende Feinbearbeitung erfolgt somit im Bereich der gehärteten Oberflächenzone, so dass die nach dem Feinbearbeiten verbleibende Oberfläche der Zahnflanken eine Härte von mindestens 45 HRC besitzt, wobei diese Härte aber auch im Bereich von 52 HRC bis 63 HRC liegen kann. Das Verfahren wird bevorzugt mit einem Kombiwerkzeug durchgeführt, bei dem ein Schälrad und ein Honrad auf einer gemeinsamen Antriebswelle sitzen, wobei das Schälrad und das Honrad eine feste Drehwinkelstellung zueinander besitzen. Während beim klassischen Honen zur Korrektur von Härteverzügen eine gewissermaßen neue Verzahnung in das Werkstück eingebracht wird, werden beim erfindungsgemäßen Honbearbeitungsschritt lediglich die nach dem Hartschälen noch vorhandenen Konturabweichungen abgetragen. Diese Abweichungen von der Sollkontur sind im Wesentlichen Gipfel eines Oberflächengebirges. Die Täler bleiben beim Honen erhalten. Der wesentliche Materialabtrag erfolgt erfindungsgemäß durch das Wälzschälen der gehärteten Flanken. Durch dieses Wälzschälen werden die Flanken grob auf Sollkontur gebracht, so dass mit dem nachfolgenden Honen lediglich die Gipfel der beim Wälzschälen erzeugten Gebirge eingeebnet bzw. abgetragen werden. Das Honen wird als reiner Schlichtprozess verwendet, bei dem nicht vollflächig Material an den Zahnflanken abgetragen wird, sondern lediglich auf über die Sollkontur hinausragenden Inseln. Dies reduziert die bei der Zerspanung induzierte Wärme im Bauteil. Der erfindungsgemäße Feinbearbeitungsschritt erfolgt somit bevorzugt ohne die Verwendung eines Kühlmediums. Auch der Wälzschälprozess erfolgt ohne die Verwendung eines Kühlmediums. Da sich das Honrad und das Wälzschälrad in einem vorbestimmten Drehwinkel zueinander und auf einer gemeinsamen Welle befinden, kann das Feinbearbeitungswerkzeug nach dem Wälzschälen direkt in eine Bearbeitungsposition gebracht werden, ohne dass eine individuelle Drehwinkelkorrektur zwischen Werkstückspindel und Werkzeugspindel vorgenommen werden muss. Das Feinbearbeiten des Werkrades erfolgt somit nicht nur in unveränderter Spannung mittels eines Honrades, sondern nach dem Wälzschälen auch lediglich durch eine Änderung der Anstellung von Werkzeugspindel zu Werkstückspindel, bevorzugt ohne eine über eine bekannte Drehwinkeldifferenz zwischen Schälrad und Honrad hinausgehende Relativverdrehung der beiden Spindelachsen. Das Verfahren ist insbesondere dadurch gekennzeichnet, dass beim Feinbearbeiten des Werkrades lediglich inselförmige Bereiche der Zahnflanken des Werkrades abgetragen werden und zwischen den Inseln verbleibende Abschnitte der Zahnflanken bei der Feinbearbeitung unbearbeitet bleiben.

### Kurze Beschreibung der Zeichnungen

Ein Ausführungsbeispiel der Erfindung wird nachfolgend anhand beigefügter Zeichnungen erläutert. Es zeigen:

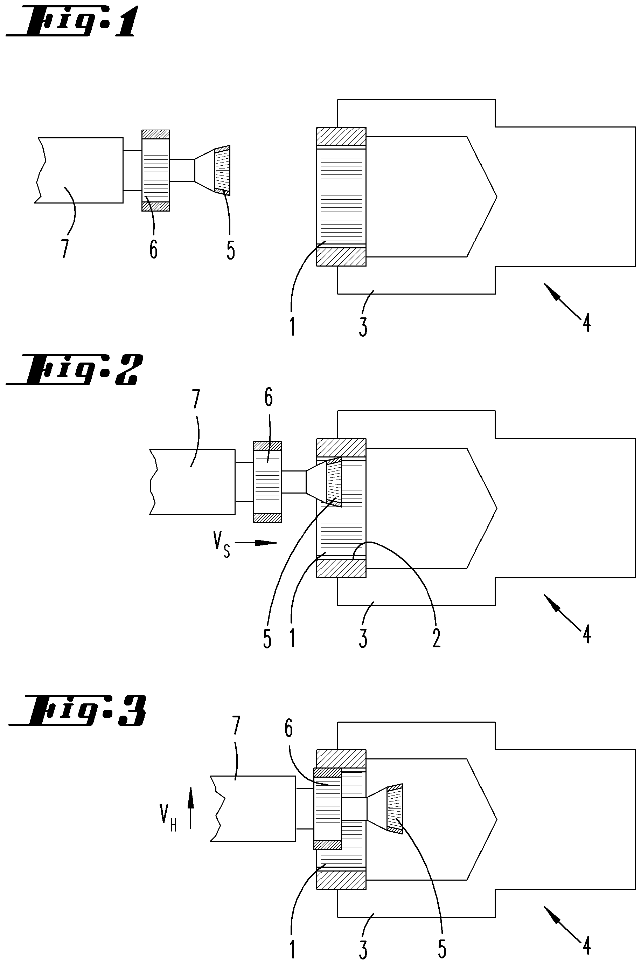

- Fig. 1: schematisch eine Werkstückspindel 4 mit einem Futter 3, welches ein Werkstück 1 spannt, sowie eine Werkzeugspindel 7, die ein aus einem Schälrad 5 und einem Honrad 6 bestehendes Kombiwerkzeug trägt;
- Fig. 2: eine Darstellung gemäß Fig. 1 bei der Schälbearbeitung und
- Fig. 3: eine Darstellung gemäß Fig. 1 bei der Honbearbeitung.

### Beschreibung der Ausführungsformen

Die Zeichnungen zeigen lediglich Details einer erfindungsgemäßen Werkzeugmaschine. Die erfindungsgemäße Werkzeugmaschine besitzt ein in den Zeichnungen nicht dargestelltes Maschinenbett sowie ein Gehäuse. Innerhalb des Gehäuses befindet sich eine Werkstückspindel 4, die von einem Elektromotor drehangetrieben wird. Darüber hinaus ist eine Werkzeugspindel 7 vorgesehen, die ein Schälwerkzeug 5 und ein Honwerkzeug 6 trägt. Bei dem Schälwerkzeug 5 handelt es sich vorzugsweise um ein Hartmetall-Schälrad, welches koaxial zu einem vorzugsweise aus CBN bestehenden Honrad 6 angeordnet ist. Die Werkzeugspindel 7 wird von einem Elektromotor angetrieben. Die Elektromotoren sind derart miteinander synchronisiert, dass die Werkstückspindel 4 und die Werkzeugspindel 7 in einem synchronisierten Gleichlauf drehangetrieben werden können. Darüber hinaus sind Antriebe vorgesehen, mit denen eine Zustellung und ein Vorschub ermöglicht wird. Sämtliche Antriebe werden von einer elektronischen Steuereinrichtung angetrieben. Die elektronische Steuereinrichtung besitzt einen Programmspeicher zur Abspeicherung eines Bearbeitungsprogrammes. Das Bearbeitungsprogramm beinhaltet ein Bearbeitungsverfahren.

Zur Durchführung des Bearbeitungsverfahrens wird ein Werkrad 1 vorbereitet. Das Werkrad 1 wird zunächst in einem ungehärteten Zustand mit einer Verzahnung versehen. Die Verzahnung besitzt ein Aufmaß von beispielsweise vier bis acht Hundertstel Millimeter, es können aber auch nur sechs Hundertstel Millimeter sein. Das Aufmaß reicht aus, die Härteverzüge und die Form- und Rundlauffehler zu korrigieren. Anschließend wird das derart vorverzahnte Werkrad gehärtet. Dabei entstehen Härteverzüge.

Das gehärtete, mit einem Aufmaß vorverzahnte Werkrad wird in einem ersten Verfahrensschritt auf die Werkzeugspindel 4 aufgespannt. In einem zweiten Verfahrensschritt wird der größte Teil des Aufmaßes durch Wälzschälen mit dem von der Werkzeugspindel 7 drehangetriebenen Schälrad 5 abgetragen. Die Bearbeitung erfolgt gewissermaßen ins volle Material und in einem Schritt, bei dem sämtliche Zahnflanken der Verzahnung 2 des Werkrades 1 bearbeitet werden. Die Wälzschälbearbeitung erfolgt mit einem Vorschub Vs in Zahnerstreckungsrichtung. Dabei stehen die Werkstückachse und die Werkzeugachse, also die Drehachsen von Werkzeugspindel 7 und Werkstückspindel 4 in einem Achskreuzwinkel zueinander. Eine Vorschubverlagerung in Radialrichtung ist beim Wälzschälen vorzugsweise nicht vorgesehen. Das Schälrad 1 kann aus Hartmetall, Keramik oder einem anderen geeigneten harten Werkstoff gefertigt sein.

In einem dritten Verfahrensschritt, der ohne Umspannen des Werkrades 1 durchgeführt wird, erfolgt eine Feinbearbeitung der durch das Wälzschälen hart-schruppbearbeiteten Verzahnung 2. Hierzu wird das Honrad 6 in eine Bearbeitungsstellung gebracht. Während der Honbearbeitung oszilliert das Werkrad 1 in Zahnerstreckungsrichtung. Die Zustellung V_{H} erfolgt hier in Radialrichtung.

### Bezugszeichenliste:

- 1: Werkrad
- 2: Verzahnung
- 3: Spannfutter
- 4: Werkstückspindel
- 5: Schälrad
- 6: Honrad
- 7: Werkzeugspindel

- V_{H}: Vorschub
- V_{S}: Vorschub

## Patentansprüche

1. Verfahren zum Bearbeiten verzahnter und gehärteter Werkräder (1) mit den folgenden Schritten:
- Aufspannen des mit Aufmaß vorverzahnten und gehärteten Werkrades (1) auf eine Werkstückspindel (4); und
- Abtragen eines Aufmaßes durch Wälzschälen mit einem von einer Werkzeugspindel (7) drehangetriebenen Schälrad (5);
**dadurch gekennzeichnet, dass** das Verfahren die folgende Schritte aufweist:
Abtragen von mindestens 50% des Aufmaßes durch das Wälzschälen mit dem von der Werkzeugspindel (7) drehangetriebenen Schälrad (5); und
- Feinbearbeiten des Werkrades (1) in unveränderter Spannung mittels eines Honrades (6),
wobei das Schälrad (5) und das Honrad (6) von einer gemeinsamen Werkzeugspindel (7) angetrieben werden, der Vorschub (V_{S}) beim Wälzschälen in der Erstreckungsrichtung der Verzahnung (2) erfolgt und die Zustellung (V_{H}) des in Erstreckungsrichtung der Verzahnung (2) oszillierend bewegten Werkrades (1) beim Honen in Radialrichtung erfolgt.

2. Verfahren nach Anspruch 1, **dadurch gekennzeichnet, dass** das Schälrad (5) ein Keramik- oder ein Hartmetallschälrad ist oder aus einem anderen harten Werkstoff besteht.

3. Verfahren nach einem der vorangehenden Ansprüche, **dadurch gekennzeichnet, dass** das Honrad (6) ein keramisch gebundenes, abrichtbares Werkzeug, insbesondere ein CBN-Werkzeug ist.

4. Verfahren nach einem der vorangehenden Ansprüche, **dadurch gekennzeichnet, dass** die Wälzschälbearbeitung in einem einzigen Schritt erfolgt.

5. Verfahren nach einem der vorangehenden Ansprüche, **dadurch gekennzeichnet, dass** das von der Werkzeugspindel (7) getragene Honrad (6) mittels einem der Vorrichtung zugeordneten Abrichtwerkzeug abgerichtet wird, das insbesondere von der Werkstückspindel (4) getragen wird.

6. Vorrichtung zur Durchführung des Verfahrens nach einem der vorhergehenden Ansprüche mit einer drehantreibbaren Werkstückspindel (4), die ein Spannfutter (3) zum Aufspannen des zu bearbeitenden Werkrades (1) aufweist, mit einer in einem Synchronlauf zur Werkstückspindel (4) drehantreibbaren Werkzeugspindel (7), die ein Schälrad (5) trägt, **dadurch gekennzeichnet, dass** die Werkzeugspindel (7) das Schälrad (5) und ein Honrad (6) trägt und die Vorrichtung mit einer programmierten elektronischen Steuereinrichtung zur Steuerung der Drehbewegung der Werkzeugspindel (7) und der der Werkstückspindel (4), der Zustellbewegung und des Vorschubs (V_{H}, V_{S}), wobei die Steuereinrichtung derart eingerichtet ist, dass nach dem Aufspannen eines mit Aufmaß vorverzahnten und gehärteten Werkrades (1) auf die Werkstückspindel (4) zumindest 50% des Aufmaßes durch Wälzschälen mit einem von der Werkzeugspindel (7) drehangetriebenen Schälrad abgetragen wird und anschließend das Werkrad (1) in derselben Aufspannung mittels eines von der Werkzeugspindel drehangetriebenen Honrades (6) feinbearbeitet wird, wobei der Vorschub (Vₛ) beim Wälzschälen in der Erstreckungsrichtung der Verzahnung (2) erfolgt und die Zustellung (Vh) des in Erstreckungsrichtung der Verzahnung (2) oszillierend bewegten Werkrades (1) beim Honen in Radialrichtung erfolgt.

7. Vorrichtung nach Anspruch 6, **dadurch gekennzeichnet, dass** das Schälrad (5) und das Honrad (6) auf einer gemeinsamen Werkzeugspindel (7) sitzen.

8. Vorrichtung nach einem der Ansprüche 6, 7, **gekennzeichnet durch** ein Abrichtwerkzeug, mit dem das von der Werkzeugspindel (7) getragene Honrad (6) abrichtbar ist.

9. Werkzeug zur Durchführung des Verfahrens gemäß einem der Ansprüche 1 bis 3, **dadurch gekennzeichnet, dass** ein Schälrad (5) und ein Honrad (6) koaxial und axial hintereinanderliegend zu einem Kombiwerkzeug zusammengefasst sind, welches von einer gemeinsamen Werkzeugspindel (7) drehantreibbar ist.

10. Vorrichtung gemäß einem der Ansprüche 6 bis 8 oder Werkzeug gemäß Anspruch 9, **dadurch gekennzeichnet, dass** das Schälrad (5) ein Hartmetallschälrad (5) ist.

11. Vorrichtung gemäß einem der Ansprüche 6 bis 8 und 10 oder Werkzeug nach einem der Ansprüche 9 und 10 **gekennzeichnet durch** ein keramisch gebundenes, insbesondere abrichtbares Honrad (6), welches insbesondere ein CBN-Werkzeug ist.

## Claims

1. A method for machining toothed and hardened work wheels (1), comprising the following steps:
- chucking the work wheel (1), which has been pre-toothed with an allowance and hardened, on a workpiece spindle (4); and
- removing of an allowance by gear skiving with a skiving wheel (5), which is driven to rotate by a tool spindle (7);
**characterized in that** the method comprises the following steps:
- removing at least 50 % of the allowance by gear skiving with the skiving wheel (5), which is driven to rotate by the tool spindle (7); and
- precision machining of the work wheel (1) with no change in chucking by means of a honing wheel (6),
wherein the skiving wheel (5) and the honing wheel (6) are driven by the same tool spindle (7), the forward movement (V_{S}) in gear skiving taking place in the direction of extent of the toothing (2), and the feed motion (V_{H}) of the work wheel (1) with an oscillating motion in the direction of extent of the toothing (2) is in the radial direction during honing.

2. The method according to claim 1, **characterized in that** the skiving wheel (5) is a ceramic or hard metal skiving wheel or is made of another hard material.

3. The method according to one of the preceding claims, **characterized in that** the honing wheel (6) is a ceramically bonded, dressable tool, in particular a CBN tool.

4. The method according to one of the preceding claims, **characterized in that** the gear-skiving machining takes place in a single step.

5. The method according to one of the preceding claims, **characterized in that** the honing wheel (6), which is carried by the tool spindle (7), is dressed by means of a dressing tool associated with the device and is carried by the tool spindle (4) in particular.

6. A device for carrying out the method according to one of the preceding claims, comprising a workpiece spindle (4) that can be driven to rotate, having a chuck (3) for chucking the work wheel (1) to be machined, comprising a tool spindle (7) that can be driven to rotate in synchronization with the workpiece spindle (4) holding a skiving wheel (5), **characterized in that** the tool spindle (7) is holding the skiving wheel (5) and a honing wheel (6), and the device comprising a programmed electronic control unit for controlling the rotational movement of the tool spindle (7) and that of the workpiece spindle (4), the feed motion and the forward movement (V_{H}, V_{S}), wherein the control unit is equipped so that, after chucking a work wheel (1) that has been pre-toothed with an allowance and hardened onto the workpiece spindle (4), at least 50 % of the allowance can be removed by gear skiving with a skiving wheel driven to rotate by the tool spindle (7), and then the work wheel (1) can be precision machined by means of a honing wheel (6) driven to rotate by the tool spindle during the same chucking, wherein the forward movement (Vₛ) in gear skiving takes place in the direction of extent of the gearing (2), and the feed motion (V_{H}) of the work wheel (1) oscillating in the direction of extent of the toothing (2) takes place in the radial direction during honing.

7. The device according to claim 6, **characterized in that** the skiving wheel (5) and the honing wheel (6) sit on the same tool spindle (7).

8. The device according to one of the claims 6, 7, **characterized by** a dressing tool with which the honing wheel (6) that is carried by the tool spindle (7) can be dressed.

9. The tool for carrying out the method according to one of the claims 1 to 3, **characterized in that** a skiving wheel (5) and a honing wheel (6) are combined coaxially and axially, one after the other, to form a combination tool, which can be driven to rotate by the same tool spindle (7).

10. The device according to one of the claims 6 to 8 or tool according to claim 9, **characterized in that** the skiving wheel (5) is a hard metal skiving wheel (5).

11. The device according to one of the claims 6 to 8 and 10 or tool according to one of the claims 9 and 10, **characterized by** a ceramically bonded, in particular dressable, honing wheel (6), which is a CBN tool in particular.

## Revendications

1. Procédé d'usinage de roues de travail dentées et trempées (1), comprenant les étapes suivantes :
- serrage, sur une broche porte-pièce (4), de la roue de travail (1) trempée et préalablement dentée avec surépaisseur ; et
- retrait d'une surépaisseur par taille par développante avec une roue de taille (5) entraînée en rotation par une broche porte-outil (7) ;
**caractérisé en ce que** le procédé comprend les étapes suivantes :
- retrait d'au moins 50 % de la surépaisseur par taille par développante avec la roue de taille (5) entraînée en rotation par la broche porte-outil (7) ; et
- finition de la roue de travail (1) en tension inchangée au moyen d'une roue de polissage (6), dans lequel la roue de taille (5) et la roue de polissage (6) sont entraînées par une broche porte-outil commune (7), l'avance (V_{S}) lors de la taille par développante s'effectue dans la direction d'extension de la denture (2) et la passe (V_{H}) de la roue de travail (1), qui est déplacée de manière oscillante dans la direction d'extension de la denture (2), s'effectue dans la direction radiale lors du polissage.

2. Procédé selon la revendication 1, **caractérisé en ce que** la roue de taille (5) est une roue de taille en céramique ou en métal dur ou consiste en un autre matériau dur.

3. Procédé selon l'une quelconque des revendications précédentes, **caractérisé en ce que** la roue de polissage (6) est un outil à liant céramique qui peut être dressé, en particulier un outil CBN.

4. Procédé selon l'une quelconque des revendications précédentes, **caractérisé en ce que** l'opération de taille par développante est réalisée en une seule étape.

5. Procédé selon l'une quelconque des revendications précédentes, **caractérisé en ce que** le dressage de la roue de polissage (6) portée par la broche porte-outil (7) est réalisé au moyen d'un outil de dressage associé au dispositif, en particulier porté par la broche porte-pièce (4).

6. Dispositif pour la mise en œuvre du procédé selon l'une quelconque des revendications précédentes, avec une broche porte-pièce (4) pouvant être entraînée en rotation, qui comprend un mandrin (3) pour le serrage de la roue de travail (1) à usiner, avec une broche porte-outil (7) pouvant être entraînée en rotation de manière synchronisée avec la broche porte-pièce (4), qui porte une roue de taille (5), **caractérisé en ce que** la broche porte-outil (7) porte la roue de taille (5) et une roue de polissage (6), et le dispositif comprend un dispositif de commande électronique programmé pour commander le mouvement de rotation de la broche porte-outil (7) et celui de la broche porte-pièce (4), le mouvement de passe et l'avance (V_{H}, V_{S}), dans lequel le dispositif de commande est réglé de telle sorte que, après le serrage sur la broche porte-pièce (4) d'une roue de travail (1) prédentée avec surépaisseur et durcie, au moins 50% de la surépaisseur est enlevée par taille par développante avec une roue de taille entraînée en rotation par la broche porte-outil (7), et ensuite la roue de travail (1) est usinée finement dans le même serrage au moyen d'une roue de polissage (6) entraînée en rotation par la broche porte-outil, dans lequel l'avance (Vₛ) lors de la taille par développante s'effectue dans la direction d'extension de la denture (2) et la passe (Vₕ) de la roue de travail (1), qui est déplacée de manière oscillante dans la direction d'extension de la denture (2), s'effectue dans la direction radiale lors du polissage.

7. Dispositif selon la revendication 6, **caractérisé en ce que** la roue de taille (5) et la roue de polissage (6) sont placées sur une broche porte-outil commune (7).

8. Dispositif selon l'une quelconque des revendications 6, 7, **caractérisé par** un outil de dressage avec lequel la roue de polissage (6) portée par la broche porte-outil (7) peut être dressée.

9. Outil pour la mise en œuvre du procédé selon l'une quelconque des revendications 1 à 3, **caractérisé en ce qu'**une roue de taille (5) et une roue de polissage (6) sont combinées de manière coaxiale et axialement l'une derrière l'autre pour former un outil combiné qui peut être entraîné en rotation par une broche porte-outil commune (7).

10. Dispositif selon l'une quelconque des revendications 6 à 8 ou outil selon la revendication 9, **caractérisé en ce que** la roue de taille (5) est une roue de taille (5) en métal dur.

11. Dispositif selon l'une quelconque des revendications 6 à 8 et 10 ou outil selon l'une quelconque des revendications 9 et 10, **caractérisé par** une roue de polissage (6) à liant céramique, en particulier qui peut être dressée, qui est en particulier un outil CBN.
